# FASCICULE DE BREVET EUROPEEN

(11) **EP 2 236 898 B1**
(45) Date de publication et mention de la délivrance du brevet: **18.03.2015**
(21) Numéro de dépôt: 10290123.8
(22) Date de dépôt: 10.03.2010
(51) Int. Cl.: F16L 59/12, F16L 5/10, E04F 17/02

(54) **Equipement pour combler le pourtour d'un orifice ménagé dans une paroi pour permettre le passage d'un conduit**
Vorrichtung zum Abdichten des äußeren Rands einer Wandöffnung zur Durchführung einer Leitung
Device for filling in the perimeter of an opening made in a wall to allow the entry of a conduit

(30) Priorité: 10.03.2009 FR 0901083; 17.07.2009 FR 0954982
(43) Date de publication de la demande: 06.10.2010
(73) Titulaire: Poujoulat, 79360 Granzay Gript (FR)
(72) Inventeur: Pierre, Jean Luc, 79460 Magne (FR); Thomas, Stéphane, 79460 Magne (FR); Coirier, Frédéric, 92380 Garches (FR); Druette, Lionel, 79180 Chauray (FR); Cant, Francis, 79000 Niort (FR)
(74) Mandataire: Michelet, Alain

(56) Documents cités:
- WO-A1-98/39591
- WO-A1-2007/049980
- DE-U1-202007 010 641
- GB-A- 2 216 220
- US-A1- 2007 261 884

## Description

La présente invention concerne le domaine général de la fumisterie. Elle concerne plus particulièrement un équipement pour combler le pourtour d'un orifice ménagé dans une paroi pour permettre le passage d'un conduit, notamment un conduit d'évacuation de fumées passant au travers d'une paroi (plancher, plafond, mur intérieur ou extérieur, traversée de toiture ...) séparant une zone chaude et une zone froide.

Un équipement similaire est décrit dans le document US 2007/0261884.

Dans un bâtiment de type maison d'habitation ou autre, les traversées de parois d'un conduit, en particulier entre une zone chaude (partie habitable) et une zone froide (combles par exemple) ne sont pas faciles à gérer de manière simple et efficace.

La présente invention propose un équipement technique particulièrement intéressant permettant d'assurer, au niveau de l'orifice de passage du conduit ménagé dans la paroi, une étanchéité à l'air optimale associée à une rupture de pont thermique efficace.

Conformément à l'invention, cet équipement comprend :
- une embase plane comportant une face avant et une face arrière, laquelle embase comporte un pourtour délimité par une bordure externe et est munie d'un orifice interne qui est délimité par une bordure interne associée à un joint d'étanchéité, laquelle embase est adaptée pour venir se positionner autour du conduit, avec sa face arrière en regard d'une face d'appui de la paroi, ledit joint venant prendre appui contre la paroi extérieure dudit conduit et la bordure externe de ladite embase étant adaptée pour s'étendre au-delà de l'encombrement dudit orifice de paroi, un moyen d'étanchement étant en outre prévu entre ladite embase et ladite face d'appui de ladite paroi, et
- une coquille isolante adaptée pour venir entourer ledit conduit, d'une part venant en appui contre la face avant de ladite embase, et d'autre part, venant en appui contre la paroi extérieure dudit conduit.
   Cette association embase de comblement/coquille isolante s'avère particulièrement simple et efficace. Les caractéristiques structurelles des composants (matériaux, dimensions ...) sont adaptées en fonction des normes éventuelles à respecter.

Une couche d'isolation classique est posée contre la face de paroi munie de cet équipement embase/coquille, laquelle couche d'isolation vient se positionner contre la coquille isolante et contre la bordure périphérique de la face avant de l'embase.

Selon une première forme de réalisation possible, l'embase est réalisée en deux parties, constituée de deux demi-plaques munies chacune d'une réservation constituant la moitié dudit orifice interne, lesdites deux demi-plaques comportant des moyens d'assemblage entre elles.
Ces moyens d'assemblage sont avantageusement constitués de pattes en saillie, solidaires chacune de l'une desdites demi-plaques et munies d'un premier orifice, lesquelles pattes sont associées chacune à un clip de maintien apte à réaliser ledit assemblage par l'intermédiaire d'un second orifice ménagé sur l'autre demi-plaque.
Cette présentation de l'embase en deux parties facilite son positionnement sur le conduit, en particulier lorsque ce dernier est déjà en place au travers de l'orifice de paroi.

Le joint d'orifice de l'embase peut être en forme de joint à lèvre(s) équipé d'une rainure permettant son emmanchement sur la bordure interne délimitant ledit orifice interne.

Selon une seconde forme de réalisation possible, l'embase comporte une plaque rigide d'un seul tenant dans laquelle est ménagé ledit orifice interne.

Dans ce cadre, le joint d'orifice de la plaque rigide d'un seul tenant est avantageusement en forme de plaque plane de matière élastique (avantageusement une plaque de silicone) munie d'un orifice de dimensions inférieures à celles de l'orifice interne ménagé dans ladite plaque rigide, laquelle plaque élastique formant joint est fixée sur l'une des faces de ladite plaque rigide, avec son orifice centré ou approximativement centré sur celui de ladite plaque rigide.
Les moyens de fixation de la plaque élastique sur l'une des faces de la plaque rigide consistent alors de préférence en une structure rapportée dont une partie est fixée sur ladite plaque rigide et dont une autre partie vient plaquer une zone de ladite plaque élastique contre l'une des faces de ladite plaque rigide, pour assurer sa fixation par pincement.
Dans ce cadre, ladite structure rapportée consiste de préférence en une plaque de matière munie d'un orifice central, la bordure périphérique externe de ladite plaque rapportée, disposée en débordement de ladite plaque élastique étant fixée directement sur ladite plaque rigide et sa partie bordant ledit orifice interne servant de zone de pincement pour ladite plaque élastique.
De plus, la plaque élastique comporte avantageusement un bourrelet sur sa bordure périphérique extérieure, et la plaque rapportée comporte un logement pour l'accueil de ce bourrelet et le blocage de ladite plaque élastique.

Le moyen d'étanchement entre l'embase et la paroi est avantageusement constitué d'un joint fixé contre la face arrière de ladite embase. Il peut s'agir d'un joint en forme de bourrelet tubulaire, ou un joint mousse, muni d'une face autocollante, fixé à proximité du pourtour de la bordure externe de l'embase.

Selon une autre particularité, la plaque d'embase est réalisée en matériau métallique (par exemple en acier galvanisé) et elle est munie d'un pli de rigidification à l'équerre, au niveau de sa bordure externe, qui s'étend du côté de sa face avant.

Selon encore une autre particularité, la face arrière de l'embase est avantageusement équipée de moyens servant de repère pour son centrage sur l'orifice ménagé dans la paroi.

De son côté, la coquille isolante est avantageusement constituée d'une couche tubulaire de matériau isolant conformée pour entourer le conduit, laquelle couche tubulaire est ceinturée par une jaquette de maintien.
La couche en matériau isolant de cette coquille est de préférence formée de deux demi-coques, chacune demi-cylindrique, associées à une jaquette de maintien constituée d'une feuille métallique flexible conformée en cylindre ouvert, munie de deux bordures libres qui sont équipées de moyens de fermeture amovibles.
Là encore, cette structure particulière facilite le positionnement de la coquille isolante sur le conduit, une fois ce dernier positionné au travers de l'orifice de paroi.

L'invention sera encore illustrée, sans être aucunement limitée, par la description suivante en relation avec les dessins annexés dans lesquels :
- la figure 1 est une vue en coupe d'un équipement conforme à l'invention mis en place sur le conduit de réception, au niveau de l'orifice de traversée de paroi ;
- la figure 2 est une vue en perspective par-dessous d'une structure possible d"embase de comblement et d'étanchéité, pour l'équipement illustré sur la figure 1, représentée isolément ;
- la figure 3 est une vue en coupe de l'embase de comblement et d'étanchéité de la figure 2;
- la figure 4 montre l'embase de comblement et d'étanchéité des figures 2 et 3, vue par-dessus, avec ses deux parties constitutives désassemblées ;
- la figure 5 est une coupe transversale du joint équipant la face arrière de l'embase des figures 2 à 4 ;
- la figure 6 est une coupe transversale du joint équipant la bordure d'orifice de l'embase des figures 2 à 4 ;
- la figure 7 est une vue en perspective de la coquille isolante seule, illustrée ici avec sa jaquette de maintien non complètement fermée ;
- la figure 8 est une vue par-dessus, côté face arrière, d'une variante de réalisation possible de l'embase de comblement et d'étanchéité ;
- la figure 9 est une vue en coupe selon le plan de coupe 9-9 de la figure 8 ;
- la figure 10 est une vue en perspective éclatée de l'embase des figures 8 et 9, montrant ses différents éléments constitutifs ;
- la figure 11 montre l'embase des figures 8 à 10 en position autour d'un conduit de réception ;
- la figure 12 est une vue en coupe transversale d'une variante de réalisation possible de l'embase de comblement et d'étanchéité selon l'invention ;
- la figure 13 est une vue agrandie d'un détail de la figure 12.

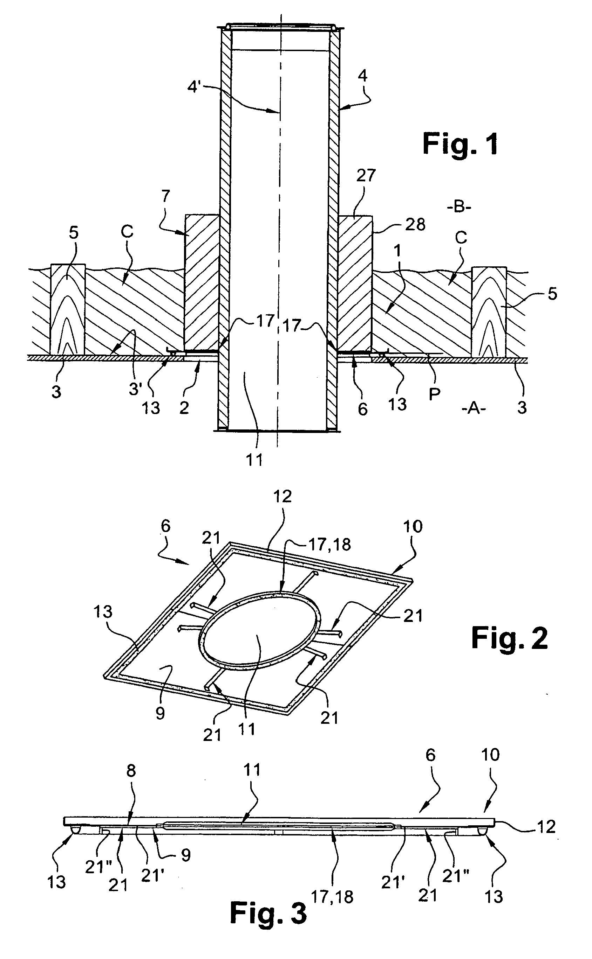

Comme on peut le voir sur la figure 1, l'équipement 1 est adapté pour combler, étancher et isoler le pourtour d'un orifice circulaire 2 ménagé dans une paroi 3 (ici un plafond), au travers duquel passe un conduit 4. Le conduit 4 est un conduit tubulaire à section circulaire qui est centré ou approximativement centré dans l'orifice de passage 2 ; son axe 4' s'étend perpendiculairement ou approximativement perpendiculairement à la paroi 3.
Le conduit 4 peut être un conduit d'évacuation de fumées provenant d'un appareil de chauffage.

La paroi 3 est ici horizontale et sépare deux volumes, l'un inférieur A (par exemple une zone chaude telle qu'une pièce d'habitation) et l'autre supérieur B (par exemple les combles sous toiture de l'habitation). Elle peut être réalisée en plaques de plâtre fixées sur des poutrelles en bois 5.

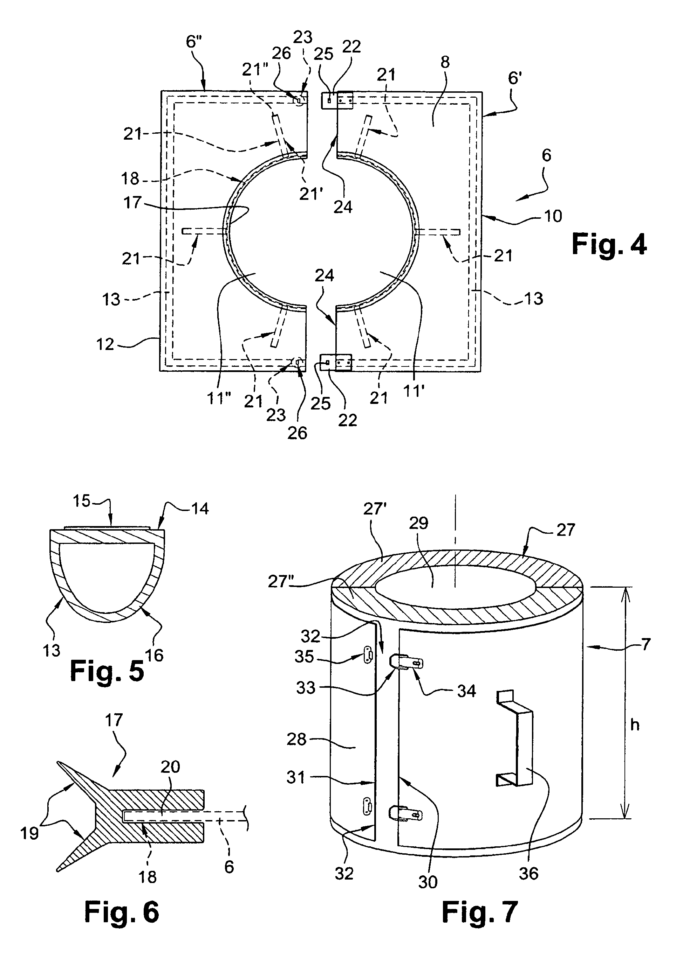

L'équipement 1 comprend - une embase de comblement 6, en forme de plaque, détaillée sur les figures 2 à 6, qui est posée sur la face d'appui 3' de la paroi 3 (face de dessus) en réalisant l'étanchéité, d'une part avec ladite paroi 3, et d'autre part avec le conduit 4, et - une coquille isolante 7, détaillée sur la figure 7, posée sur ladite embase de comblement 6 et venant ceinturer ledit conduit 4 sur une partie de sa hauteur.

Comme on peut le voir sur les figures 2 à 4, l'embase de comblement 6 présente ici une forme générale carrée (ayant par exemple 50 à 60 cm de côté), avec une face avant 8 et une face arrière 9 ; elle est délimitée par une bordure extérieure 10 et comporte un orifice interne 11 de forme générale circulaire.

Tel qu'illustré sur la figure 4, cette embase 6 est en fait constituée de deux demi-plaques 6' et 6" munies chacune d'une réservation 11', 11" de forme demi-circulaire ; des moyens d'assemblage, détaillés ci-dessous, sont prévus pour solidariser entre elles les deux demi-plaques 6' et 6" et reconstituer ainsi l'embase 6 des figures 1, 2 et 3, avec l'orifice central circulaire 11 (formé de l'association des deux réservations complémentaires 11' et 11 ").

L'embase 6 est par exemple réalisée en feuille d'acier galvanisé de 1 mm d'épaisseur; elle est avantageusement munie d'un pli de rigidification périphérique 12 (ayant par exemple 10 mm de hauteur) qui s'étend à l'équerre sur tout le long de sa bordure périphérique 10, orienté du côté de sa face avant 8.

Un joint d'étanchéité 13 est fixé sur tout le pourtour de la face arrière 9 de l'embase 6, à quelques millimètres (par exemple 10 mm) de la bordure périphérique 10. Ce joint 13, détaillé sur la figure 5 (vu en section) est en forme de bourrelet tubulaire muni d'une face plane 14 équipée d'un adhésif 15 pour sa fixation contre ladite face arrière 9, et dont l'extrémité opposée 16 est à section demi-circulaire. Ce joint périphérique 13, réalisé par exemple en caoutchouc cellulaire, peut avoir une hauteur comprise entre 5 et 12 mm et une largeur de l'ordre de 10 à 15 mm.

Un second joint d'étanchéité 17 est prévu sur la bordure interne 18 délimitant l'orifice 11. Ce joint 17, détaillé sur la figure 6 (vu en section) comprend, d'un côté, deux lèvres d'étanchéité superposées 19, et de l'autre côté, une rainure 20 pour son encastrement sur la bordure 18 de l'embase 6 délimitant l'orifice 11 ; il peut être réalisé en silicone.

Les joints 13 et 17 sont réalisés en deux parties équipant chacune l'une des demi-plaques 6', 6".

Du côté de sa face arrière 9, l'embase 6 comporte encore des organes 21 servant de repères pour son centrage sur l'orifice de paroi 2. Ces organes de centrage 21, ici au nombre de six, consistent en des languettes rectilignes s'étendant de manière rayonnée, ou sensiblement rayonnée, depuis la bordure d'orifice 18 en direction de la bordure périphérique 10. Ces languettes 21 sont réalisées en métal (acier galvanisé par exemple) ; elles ont une section longitudinale en L dont l'une des ailes 21' est solidarisée par soudage contre la face arrière 9 de l'embase 6, et dont l'autre aile 21", située au niveau de l'extrémité « extérieure » de l'aile 21', s'étend sur chant, dans un plan perpendiculaire à celui de l'embase 6, sur une hauteur de l'ordre de 10 à 15 mm par exemple. L'aile d'extrémité 21" de chaque languette 21 est placée sur un cercle qui est centré sur le centre de l'orifice 11 et dont le diamètre est prévu légèrement inférieur au diamètre de l'orifice de paroi 2.

Les moyens d'assemblage des deux demi-coquilles 6' et 6" sont détaillés sur la figure 4. Ils consistent en deux pattes 22 fixées par exemple par soudage sur l'une des demi-plaques 6' et aptes à être chacune solidarisée avec l'autre demi-plaque 6" par l'intermédiaire d'un clip de maintien 23.
Les pattes 22 sont pour cela fixées au niveau de la bordure d'assemblage 24 de la demi-plaque 6' et elles comportent une partie en saillie, orientée vers l'autre demi-plaque 6" qui est munie d'un premier orifice d'assemblage 25. De son côté, l'autre demi-plaque 6" comporte un second orifice d'assemblage 26 adapté pour venir en superposition avec ledit premier orifice 25 de patte 22, afin d'être traversé par une goupille d'assemblage constitutive dudit clip de maintien 23.
Ce clip de maintien 23, réalisé en matière plastique, peut être du type à goupille constituée de pattes flexibles parallèles munies d'ergots d'encliquetage au niveau de leur extrémité libre.

Les dimensions de l'embase 6 sont adaptées :
- pour que sa bordure périphérique, avec le joint 13, vienne reposer sur la face en regard (face supérieure 3') de la paroi 3, autour de l'orifice de paroi 2, et
- pour qu'une fois l'orifice 11 reconstitué (par l'assemblage des deux demi-plaques 6' et 6"), son diamètre soit très légèrement inférieur au diamètre du conduit 4 (de sorte que le joint 17 vienne prendre convenablement appui contre la face extérieure dudit conduit 4, tout en étant comprimé, afin de réaliser l'étanchéité recherchée).

Dans une variante de réalisation, l'embase de comblement 6 est de forme générale circulaire.

La coquille isolante 7, représentée isolément sur la figure 7, est formée d'une couche tubulaire cylindrique 27 en matériau isolant, ceinturée par une jaquette de maintien 28.

La couche cylindrique de matériau isolant 27 est constituée de l'assemblage de deux demi-coques 27' et 27", toutes deux de forme demi-cylindrique. Leur juxtaposition permet la constitution du cylindre isolant 27, délimitant un orifice interne 29 destiné à recevoir le conduit 4 (le diamètre au repos de l'orifice 29 est légèrement inférieur au diamètre externe du conduit 4, de manière à obtenir une légère compression du matériau isolant lors de la pose de la coquille 7).
Le matériau isolant utilisé peut être de la laine de roche ayant une densité de 90 kg/m³ ; l'épaisseur de la paroi du cylindre 27 est avantageusement comprise entre 8 et 15 cm, de préférence supérieure ou égale à 8 cm ; son diamètre externe peut être de l'ordre de 40 à 45 cm.

La jaquette de maintien 28 consiste en une feuille d'acier galvanisé conformée en cylindre ouvert, dont les deux bordures libres en vis-à-vis 30 et 31 sont équipées de moyens de fermeture amovibles, ici en forme d'organes de crochetage 32 de type « sauterelle ».
Chaque organe de crochetage 32 est formé d'un anneau 33 associé à un levier 34, fixé sur l'une des bordures 30 de la jaquette 28, adapté pour coopérer avec un crochet 35 fixé sur l'autre bordure 31.
Une fois les moyens de fermeture 32 activés, la jaquette 28 positionnée autour du cylindre 27 comprime légèrement le matériau isolant 27 (pour permettre son serrage sur le conduit 4).

Sur la figure 7, on remarque que la face externe de la jaquette 28 comporte une poignée 36 pour faciliter sa manipulation. Cette poignée 36 peut être réalisée par pliage d'une platine en inox, dont les extrémités sont soudées sur la jaquette 28.
On remarque également que la jaquette 28 a une hauteur un peu inférieure à la hauteur du cylindre isolant 27, de manière à permettre audit cylindre 27 de déborder légèrement de part et d'autre.
La hauteur h du cylindre isolant 27 peut, par exemple, être comprise entre 25 et 50 cm, la hauteur de la jaquette 28 lui étant inférieure de 2 à 3 cm.

L'aspect multi-pièces complémentaires de l'embase 6 (deux demi-plaques 6' et 6") et de la coquille isolante 7 (deux demi-coques 27', 27" associées à la jaquette de maintien 28) autorise la pose de l'équipement d'étanchéité et d'isolation 1 après que le conduit 4 ait été installé au travers de l'orifice de paroi 2.

Après réalisation de l'orifice 2 dans la paroi 3, le conduit 4 est mis en place, maintenu par tous moyens de fixation appropriés (non représentés), par exemple un système classique de collier(s) associé(s) à des flasques et cornières de maintien fixés aux entrais de fermette dans le volume B.

Les deux demi-plaques 6' et 6", séparées l'une de l'autre, peuvent alors être mises en place autour du conduit 4 pour constituer l'embase de comblement 6, avec sa face arrière 9 en appui contre la face de dessus 3' de la paroi 3, et avec sa face avant 8 orientée vers le haut. La bordure périphérique 10 de l'embase 6 reconstituée s'étend au-delà de l'encombrement de l'orifice 2 ; le joint d'étanchéité périphérique 13 vient alors s'appuyer contre la face de dessus 3' de la paroi 3, sur le pourtour de l'orifice 2, et le joint d'orifice 17 vient s'appuyer contre la paroi externe du conduit 4. L'embase 6 s'étend dans un plan P qui est perpendiculaire à l'axe 4' du conduit 4 ; les languettes de repérage 21 permettent de situer le conduit 4 au-delà de la distance de sécurité, choisie ou imposée, des matériaux combustibles environnants.
Les deux demi-plaques 6' et 6" sont assemblées entre elles par les moyens d'assemblage 22, 23 (activation des clips de maintien 23 après superposition des couples d'orifices 25-26).

A ce moment, l'étanchéité peut être complétée au moyen de bandes adhésives positionnées sur la ligne d'assemblage 24 des deux demi-plaques 6' et 6", ainsi que sur le pourtour 10 de l'embase 6 reconstituée. Le cas échéant, de telles bandes adhésives peuvent suffire pour obtenir l'étanchéité recherchée entre l'embase 6 et la paroi 3, et le joint périphérique 13 équipant la face arrière 9 peut être supprimé.

On pose ensuite la coquille isolante 7 en installant les deux demi-coques 27' et 27" autour du conduit 4, avec leur face inférieure en appui sur la face avant 8 de l'embase de comblement 6, puis en installant la jaquette de maintien 28 autour du cylindre isolant 27 reconstitué. Cette mise en place de la jaquette 28 est possible du fait de la flexibilité de la feuille de métal constitutive (les bordures 29 et 30 en regard peuvent être écartées l'une de l'autre d'une distance supérieure au diamètre du cylindre isolant 27).
La jaquette 28 est approximativement centrée sur la hauteur du cylindre isolant 27 et elle est fermée au moyen des organes de crochetage 31, pour assurer une légère compression de ce cylindre isolant 27 contre le conduit 4.
Le diamètre de la coquille isolante 7 est prévu inférieur à la longueur du côté de l'embase de comblement 6, de manière à ce que la face de dessus 8 de cette dernière réceptionne complètement ladite coquille 7.
On peut ensuite mettre en place une isolation C sur la paroi 3, côté zone froide B.
Cette isolation C, par exemple une couche de laine de roche ou de laine de verre, est posée entre les poutrelles de bois 5 ; elle vient en appui contre la coquille isolante 7 et elle vient recouvrir la bordure périphérique de l'embase de comblement 6 (qui déborde de l'encombrement de la coquille 7).
La hauteur h de la coquille 7 est adaptée pour être supérieure à l'épaisseur de la couche d'isolation C envisagée.

On obtient ainsi un équipement de comblement étanche et isolant, très facile à installer et éventuellement aussi à déposer.

La paroi externe de la coquille isolante 7 définit une limite physique qui empêche les matériaux environnants de venir à proximité du conduit 4 (dans la zone ceinturée), participant ainsi, le cas échéant, au respect d'éventuelles normes imposées.

On notera en outre que le serrage de la coquille isolante 7 sur le conduit 4 permet de faire supporter audit conduit le poids de ladite coquille 7, et ainsi de ne pas surcharger le plafond 3.

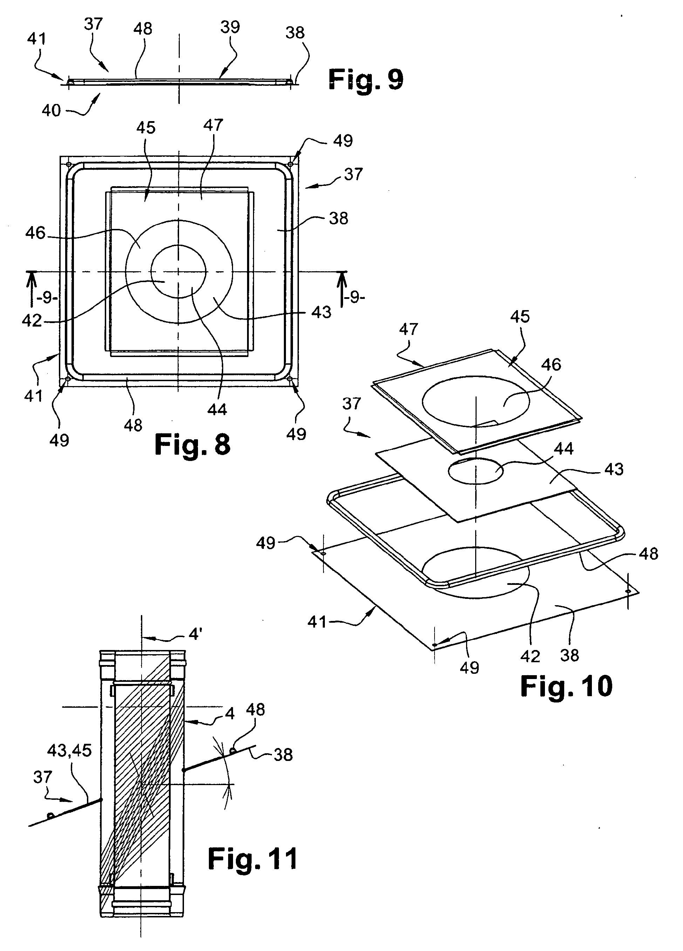

Les figures 8 à 11 illustrent une variante de réalisation de l'embase de l'équipement 1.

Ici, l'embase 37 comprend une plaque rigide 38, d'un seul tenant, ayant une face avant 39 et une face arrière 40, délimitée par un pourtour périphérique 41, de forme générale carrée. Cette plaque 38 est réalisée par exemple en acier galvanisé de 0,8 mm d'épaisseur, et elle comporte un orifice central 42, ici circulaire, dont la bordure est équipée d'un joint 43 en forme de plaque plane de matière élastique, muni d'un orifice central 44.
La plaque de matière élastique formant joint 43 est avantageusement réalisée en silicone ; son épaisseur peut être de l'ordre de 1,5 mm.

Cette plaque de matière élastique 43 est fixée sur l'une des faces de la plaque rigide 38, avec son orifice 44 centré ou sensiblement centré sur l'orifice de plaque 42. Cette fixation peut être obtenue par tout moyen approprié ; cependant, elle est de préférence réalisée par pincement, au moyen d'une plaque rapportée 45 munie d'un orifice central 46.

La plaque de fixation 45 peut être obtenue en acier galvanisé de 0,8 mm d'épaisseur; elle présente ici une forme générale rectangulaire et sa bordure périphérique extérieure comporte un pli de rigidification à l'équerre 47.
Cette plaque de fixation 45 a des dimensions supérieures à celles de la plaque de matière élastique 43 mais inférieures à celles de la plaque rigide 38 ; son orifice central 46 a une forme et une dimension qui sont identiques ou proches de celles de l'orifice 42 de ladite plaque rigide 38.
La fixation de la plaque de matière élastique 43 est obtenue :
- par sa prise en sandwich et pincement entre la plaque rigide 38 et la plaque de fixation 45, les différents orifices 42, 44 et 46 étant disposés coaxialement ou sensiblement coaxialement, et
- par solidarisation, par exemple au moyen de points de soudure, entre la zone de la plaque de fixation 45 qui déborde de la plaque de matière élastique 43, et la partie en regard de la plaque rigide 38.

Le pli à l'équerre 47 de la plaque de fixation 45 est orienté à l'opposé de la plaque rigide 38, côté face avant 39 de cette dernière.

La solidarisation entre la plaque 38 et la plaque de fixation 45 est réalisée en dehors de l'encombrement de la plaque de joint 43 pour assurer une fixation de cette dernière par un simple phénomène de pincement ; une telle fixation par pincement s'avère à la fois efficace et elle respecte l'intégrité de la plaque de matière élastique 43, ce qui présente un intérêt particulier pour un matériau tel que le silicone, relativement fragile au percement et difficilement collable.

La face d'appui de la plaque 38, destinée à venir en regard de la paroi que l'on souhaite équiper, reçoit un joint périphérique 48, par exemple un joint plat en mousse (ici, c'est la face avant 39 de la plaque 38, constituant aussi la face avant de d'embase 37, qui reçoit le joint périphérique 48).

D'autre part, sur les figures 8 et 10, on remarque la présence d'orifices 49 ménagés au niveau des angles de la plaque rigide 38, adaptés pour permettre la fixation de l'embase 37 sur la paroi que l'on souhaite équiper, par exemple au moyen de vis de fixation.

L'orifice circulaire 44 de la plaque de joint 43 est sous-dimensionné par rapport au diamètre externe du conduit que l'on veut équiper. D'autre part, les orifices 42 et 46, respectivement de la plaque rigide 38 et de la plaque de fixation 41, sont surdimensionnés par rapport à ce diamètre de conduit.

Le positionnement de l'embase 37 pour combler l'orifice 2 de la paroi 3 peut être réalisé avant ou après la pose du conduit.
Dans tous les cas, on introduit l'une des extrémités du conduit 4 dans l'orifice 42, 46 de l'embase 37 et la partie de joint plat 43 qui borde l'orifice 44 vient automatiquement se déformer pour épouser la face externe de ce conduit 4, par ses caractéristiques d'élasticité.
Une telle structure de comblement s'avère très simple à fabriquer et à poser.

On notera que le surdimensionnement des orifices 42 et 46 de l'embase 37 par rapport au diamètre externe du conduit 4 équipé, autorise une pose de l'embase de comblement 37 en pente par rapport au plan perpendiculaire à l'axe 4' du conduit 4, cela grâce à la capacité de déformation du joint plat 43.
La figure 11 illustre un tel positionnement en pente.
Cette structure de comblement présente donc une grande polyvalence de pose.

Les orifices 42 et 46 peuvent avoir une forme autre que circulaire (par exemple carrée, rectangulaire, oblongue ou en ellipse).
Egalement, la plaque rigide 38 et la plaque de fixation 45 peuvent avoir une forme générale autre que carrée ou rectangulaire (par exemple circulaire).

Après la pose de l'embase 37, la coquille isolante 7 est mise en place de la même manière que celle expliquée ci-dessus.
En cas de positionnement en pente de l'embase 37, la base de la coquille isolante 7 est découpée selon un secteur angulaire adapté.

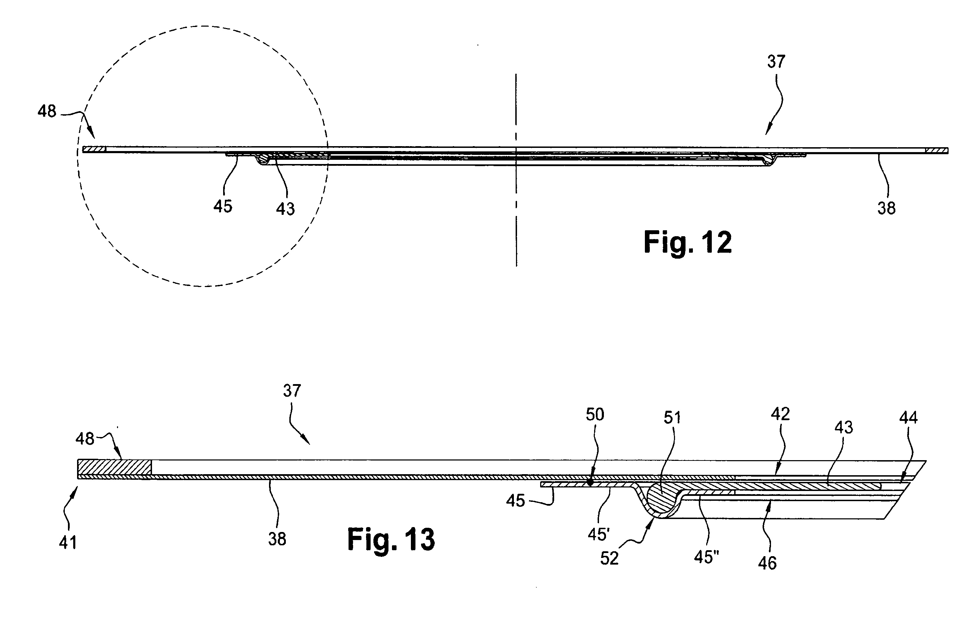

Les figures 12 et 13 illustrent une variante de l'embase de comblement des figures 8 à 11. Dans la description qui suit, pour faciliter la compréhension, les parties structurelles identiques conservent les mêmes repères.
On retrouve donc ici une embase 37 comprenant :
- une plaque rigide 38 avec un orifice central 42
- un joint plat 43, avantageusement en silicone, avec un orifice central 44, et
- une plaque rapportée 45, pour la fixation du joint plat 43 par pincement contre la plaque rigide 38, cette plaque rapportée 45, munie d'un orifice central 46, étant solidarisée avec ladite plaque rigide 38 par points de soudure 50.

Dans cette variante de réalisation, la bordure périphérique extérieure du joint plat 43 comporte un bourrelet ou tore périphérique 51, et la plaque rapportée de fixation 45 comporte un logement 52 conformé pour accueillir ledit bourrelet 51 en vue d'assurer un blocage ou maintien mécanique dudit joint 43, en complément de l'effet de pincement précité.

La solidarisation de la plaque rapportée 45 avec la plaque rigide 38 est réalisée sur une zone 45' de ladite plaque 45 située extérieurement par rapport au logement 52 ; et le pincement mécanique est obtenu par une zone 45" de la plaque 45 située intérieurement par rapport au logement 52 (sur le pourtour de l'orifice 46).

La section du bourrelet 51 peut être circulaire ou approximativement circulaire ; et la section du logement 52 est complémentaire de celle dudit bourrelet 51. Ce bourrelet 51 est avantageusement continu sur toute la périphérie extérieure du joint plat 43 ; sa forme générale peut être circulaire, carrée ou autre et son épaisseur peut être de l'ordre de 5 mm.
La forme générale du logement 52 est adaptée à celle du bourrelet 51.

On notera que la partie intérieure 45" de la plaque 45 s'étend dans un plan qui est légèrement décalé par rapport au plan de la partie extérieure 45', pour tenir compte de l'épaisseur du joint plat 43.

Le bourrelet 51 est avantageusement réalisé monobloc avec le reste du joint plat 43 ; il peut aussi être obtenu au moyen d'une pièce rapportée, solidarisée par tout moyen approprié.

Ce type d'équipement 1 de comblement et d'isolation peut être envisagé pour combler tout orifice traversé par un conduit, que cet orifice soit ménagé dans un mur intérieur ou extérieur, horizontal ou vertical, voire même en pente (traversée de toiture par exemple).

## Revendications

1. Equipement pour combler le pourtour d'un orifice (2) ménagé dans une paroi (3) pour permettre le passage d'un conduit (4), **caractérisé en ce qu'**il comprend :
- une embase plane (6, 37) comportant une face avant (8, 39) et une face arrière (9, 40), laquelle embase (6, 37) comporte un pourtour délimité par une bordure externe (10, 41) et est munie d'un orifice interne (11 ; 42, 45) qui est délimité par une bordure interne associée à un joint d'étanchéité (17, 39), laquelle embase (6, 37) est adaptée pour venir se positionner autour dudit conduit (4), avec sa face arrière (9, 40) en regard de l'une des faces d'appui (3') de ladite paroi (3), ledit joint (17, 39) venant prendre appui contre la paroi extérieure dudit conduit (4) et la bordure externe (10, 41) de ladite embase (6, 37) étant adaptée pour s'étendre au-delà de l'encombrement dudit orifice de paroi (2), un moyen d'étanchement (13, 44) étant en outre prévu entre ladite embase (6, 37) et ladite face d'appui (3') de ladite paroi (3), et
- une coquille isolante (7) adaptée pour venir entourer ledit conduit (4), d'une part venant en appui contre la face avant (8) de ladite embase (6, 37), et d'autre part, venant en appui contre la paroi extérieure dudit conduit (4).

2. Equipement selon la revendication 1, **caractérisé en ce qu'**il comprend une embase (6) en deux parties, constituée de deux demi-plaques (6', 6"), munies chacune d'une réservation (11', 11") constituant la moitié dudit orifice interne (11), lesdites deux demi-plaques (6', 6") comportant des moyens d'assemblage entre elles (22, 23).

3. Equipement selon la revendication 2, **caractérisé en ce que** les moyens d'assemblage entre elles desdites demi-plaques (6', 6") sont constitués de pattes (22) en saillie solidaires chacune de l'une desdites demi-plaques (6', 6") et munies d'un premier orifice (25), lesquelles pattes (22) sont associées chacune à un clip de maintien (23) apte à réaliser ledit assemblage par l'intermédiaire d'un second orifice (26) ménagé dans l'autre demi-plaque (6', 6").

4. Equipement selon l'une quelconque des revendications 1 à 3, **caractérisé en ce que** joint d'orifice (17) de l'embase (6) est en forme de joint à lèvre(s) équipé d'une rainure (20) permettant son emmanchement sur la bordure interne (18) délimitant ledit orifice intérieur (11).

5. Equipement selon la revendication 1, **caractérisé en ce qu'**il comprend une embase (37) comportant une plaque rigide d'un seul tenant (38) dans laquelle est ménagé ledit orifice intérieur (42).

6. Equipement selon la revendication 5, **caractérisé en ce que** le joint d'orifice de la plaque (38) est en forme de plaque plane (43) de matière élastique munie d'un orifice (44) de dimensions inférieures à celles de l'orifice interne (42) ménagé dans ladite plaque (38), laquelle plaque élastique (43) formant joint est fixée sur l'une des faces de ladite plaque (38), avec son orifice (44) centré ou approximativement centré sur celui (42) de ladite plaque (38)

7. Equipement selon la revendication 6, **caractérisé en ce que** le joint d'orifice (43) de la plaque (38) est en forme de plaque de silicone.

8. Equipement selon l'une quelconque des revendications 6 ou 7, **caractérisé en ce que** les moyens de fixation de la plaque élastique (43) sur l'une des faces de la plaque (38) consistent en une structure rapportée (45) dont une partie est fixée sur ladite plaque (38) et dont une autre partie vient plaquer une zone de ladite plaque élastique (43) contre l'une des faces de ladite plaque (38), pour assurer sa fixation par pincement.

9. Equipement selon la revendication 8, **caractérisé en ce que** ladite structure rapportée (45) consiste en une plaque de matière munie d'un orifice central (48), la bordure périphérique externe de ladite plaque rapportée (45), disposée en débordement de la plaque élastique (43) étant fixée directement sur ladite plaque (38) et sa partie bordant ledit orifice central (46) servant de zone de pincement pour ladite plaque élastique (43).

10. Equipement selon la revendication 9, **caractérisé en ce que** ladite plaque élastique (43) comporte un bourrelet (51) sur sa bordure périphérique extérieure et **en ce que** ladite plaque rapportée (45) comporte un logement (52) pour l'accueil dudit bourrelet (51) et le blocage de ladite plaque élastique (43).

11. Equipement selon l'une quelconque des revendications 1 à 10, **caractérisé en ce que** le moyen d'étanchement entre l'embase (6, 37) et la paroi (3) est constitué d'un joint (13, 48) fixé contre la face arrière (9, 39) de ladite embase (6, 37).

12. Equipement selon l'une quelconque des revendications 1 à 11, **caractérisé en ce que** la plaque d'embase (6', 6") est réalisée en matériau métallique et est munie d'un pli à l'équerre (12), au niveau de sa bordure externe (10), qui s'étend du côté de sa face d'appui (8).

13. Equipement selon l'une quelconque des revendications 1 à 12, **caractérisé en ce que** la face arrière (9) de l'embase (6, 37) est équipée de moyens (21, 47) servant de repères pour son centrage sur l'orifice (2) ménagé dans la paroi (3).

14. Equipement selon l'une quelconque des revendications 1 à 13, **caractérisé en ce que** la coquille isolante (7) est constituée d'une couche tubulaire (27) de matériau isolant, conformée pour entourer le conduit (4), laquelle couche tubulaire (27) est ceinturée par une jaquette de maintien (28).

15. Equipement selon la revendication 14, **caractérisé en ce que** la couche en matériau isolant (27) de la coquille (7) est formée de deux demi-coques (27', 27") chacune demi-cylindrique, associées à une jaquette de maintien (28) constituée d'une feuille métallique flexible conformée en cylindre ouvert, munie de deux bordures libres (29, 30) qui sont équipées de moyens de fermeture amovible (31).

## Patentansprüche

1. Vorrichtung zum Abdichten des äusseren Rands einer in einer Wand (3) ausgebildeten Öffnung (2) zur Durchführung einer Leitung (4), **dadurch gekennzeichnet, dass** sie folgendes aufweist:
- einen ebenen Sockel (6, 37) mit einer Vorderseite (8, 39) und einer Rückseite (9, 40), wobei der Sockel (6, 37) einen durch einen äusseren Rand (10, 41) begrenzten Umfang aufweist und mit einer inneren Öffnung (11; 42, 45) versehen ist, die durch einen inneren Rand mit zugehörigem Dichtring (17, 39) begrenzt ist, wobei der Sockel (6, 37) dazu ausgelegt ist, mit seiner Rückseite (9, 40) zu einer der Auflageseiten (3') der Wand (3) hin um die Leitung gelegt zu werden, wobei der Dichtring (17, 39) auf der Aussenwand der Leitung (4) aufliegt und der äussere Rand (10, 41) des Sockels (6, 37) dazu ausgelegt ist, sich über die Abmessungen des Loches (2) in der Wand hinaus zu erstrecken, wobei ausserdem ein Dichtmittel (13, 44) zwischen dem Sockel (6, 37) und der Auflageseite (3') der Wand (3) vorgesehen ist, und
- eine Isolierummantelung (7), die dazu ausgelegt ist, die Leitung (4) zu umgeben, und dabei einerseits auf der Vorderseite (8) des Sockels (6, 37) in Auflage kommt und andererseits auf der Aussenwand der Leitung (4) in Auflage kommt.

2. Vorrichtung gemäss Anspruch 1, **dadurch gekennzeichnet, dass** sie einen zweiteiligen Sockel (6) aufweist, der aus zwei Halbplatten (6', 6") besteht, von denen jede einen Ausschnitt (11', 11") aufweist, der die Hälfte des inneren Loches (11) bildet, wobei die beiden Halbplatten (6', 6") Mittel (22, 23), um sie miteinander zu verbinden, aufweisen.

3. Vorrichtung gemäss Anspruch 2, **dadurch gekennzeichnet, dass** die Mittel der Halbplatten (6', 6"), um sie miteinander zu verbinden, aus hervorstehenden Laschen (22) bestehen, die mit der einen der beiden Halbplatten (6', 6") fest verbunden sind und jeweils ein erstes Loch (25) aufweisen, wobei jede der Laschen (22) einem Befestigungsclip (23) zugeordnet ist, der dazu ausgelegt ist, die Verbindung mittels eines in der anderen Halbplatte (6', 6") geformten zweiten Lochs (26) herzustellen.

4. Vorrichtung gemäss einem der Ansprüche 1 bis 3, **dadurch gekennzeichnet, dass** der Dichtring (17) des Sockels (6) in Form einer Dichtung mit einer (oder mehreren) Lippe(n) und einer Rille (20), die zum Aufschieben der Dichtung auf den das innere Loch (11) begrenzenden Innenrand (18) vorgesehen ist, ausgebildet ist.

5. Vorrichtung gemäss Anspruch 1, **dadurch gekennzeichnet, dass** sie einen Sockel (37) aufweist, der aus einer einstückigen steifen Platte (38) besteht, in die das innere Loch (42) eingebracht ist.

6. Vorrichtung gemäss Anspruch 5, **dadurch gekennzeichnet, dass** der Dichtring der Platte (38) aus einer ebenen Platte (43) aus elastischem Material besteht, die mit einem Loch (44) versehen ist, dessen Abmessungen kleiner als die des in der Platte (38) geformten inneren Lochs (42) sind, wobei die eine Dichtung bildende elastische Platte (43) auf der einen der beiden Seiten der Platte (38) befestigt ist und dabei deren Loch (44) in Bezug auf jenes (42) der Platte (38) zentriert oder annähernd zentriert ist.

7. Vorrichtung gemäss Anspruch 6, **dadurch gekennzeichnet, dass** der Dichtring (43) der Platte (38) in Form einer Silikonplatte ausgeführt ist.

8. Vorrichtung gemäss einem der Ansprüche 6 oder 7, **dadurch gekennzeichnet, dass** die Mittel zur Befestigung der elastischen Platte (43) auf einer der Seiten der Platte (38) aus einer angebrachten Struktur (45) bestehen, von der ein Teil auf der Platte (38) befestigt ist und von der ein anderer Teil eine Zone der elastischen Platte (43) gegen eine der Seiten der Platte (38) drückt, um deren Befestigung durch Klemmung sicherzustellen.

9. Vorrichtung gemäss Anspruch 8, **dadurch gekennzeichnet, dass** die angebrachte Struktur (45) aus einer mit einem zentralen Loch (48) versehenen Materialplatte besteht, wobei die äussere Umrandung der gegenüber der elastischen Platte (43) überstehenden angebrachten Platte (45) direkt auf der Platte (38) befestigt ist und der das zentrale Loch (46) umgebende Teil als Klemmzone für die elastische Platte (43) dient.

10. Vorrichtung gemäss Anspruch 9, **dadurch gekennzeichnet, dass** die elastische Platte (43) an ihrer äusseren Umrandung einen Wulst (51) aufweist und dass die angebrachte Platte (45) einen Aufnahmeraum (52) zur Aufnahme des Wulstes (51) und der Blockierung der elastischen Platte (43) aufweist.

11. Vorrichtung gemäss einem der Ansprüche 1 bis 10, **dadurch gekennzeichnet, dass** das Dichtmittel zwischen dem Sockel (6, 37) und der Wand (3) aus einer an der Rückseite (9, 39) des Sockels (6, 37) befestigten Dichtung (13, 48) besteht.

12. Vorrichtung gemäss einem der Ansprüche 1 bis 11, **dadurch gekennzeichnet, dass** die Sockelplatte (6', 6") aus metallenem Material hergestellt ist und an ihrem äusseren Rand (10) mit einer im rechten Winkel stehenden Faltung (12) versehen ist, die sich auf ihrer Auflageseite (8) erstreckt.

13. Vorrichtung gemäss einem der Ansprüche 1 bis 12, **dadurch gekennzeichnet, dass** die Rückseite (9) des Sockels (6, 37) mit Mitteln ausgestattet ist, die als Führungen für dessen Zentrierung auf dem in der Wand (3) ausgebildeten Lochs (2) dienen.

14. Vorrichtung gemäss einem der Ansprüche 1 bis 13, **dadurch gekennzeichnet, dass** die Isolierummantelung (7) aus einer rohrförmigen Schicht (27) aus isolierendem Material besteht, die dazu ausgebildet ist, die Leitung (4) zu umgeben, wobei die rohrförmige Schicht (27) von einer Montagehülle (28) umgeben ist.

15. Vorrichtung gemäss Anspruch 14, **dadurch gekennzeichnet, dass** die Schicht (27) aus isolierendem Material der Ummantelung (7) aus zwei jeweils halbzylindrischen Halbschalen (27', 27") gebildet ist, die einer Montagehülle (28) aus einem flexiblen, zu einem offenen Zylinder geformten Metallblech zugeordnet sind, das zwei freie Ränder (29, 30) aufweist, die mit abnehmbaren Verschlussmitteln (31) ausgerüstet sind.

## Claims

1. Device for filling in the perimeter of an opening (2) formed in a wall (3) for allowing a pipe (4) to pass, **characterised in that** it comprises:
- a flat base (6, 37) comprising a front side (8, 39) and a rear side (9, 40), said base (6, 37) comprising a perimeter limited by an outer edge (10, 41) and being provided with an inner hole (11; 42, 45) associated to a gasket (17, 39), said base (6, 37) being formed for being positioned around said pipe (4) with its rear side (9, 40) oriented towards one of the support sides (3') of said wall (3), said gasket (17, 39) being pressed against the external wall of said pipe (4), and the external edge (10, 41) of said base (6, 37) being formed for extending beyond the outline of said hole (2) of the wall, a sealing means being further provided between said base (6, 37) and said support side (3') of said wall (3), and
- an insulating shell (7) formed for surrounding said pipe (4), and on the one hand being pressed against the front side (8) of said base (6, 37) and on the other hand being pressed against the external wall of said pipe (4).

2. Device according to claim 1, **characterised in that** it comprises a two-part base (6) formed by two half-plates (6', 6") each being provided with a cut-out (11', 11") forming half of said internal hole (11), said two half-plates (6', 6") comprising means (22, 23) for assembling them with one another.

3. Device according to claim 2, **characterised in that** the means for assembling the half-plates (6', 6") with one another are straps (22) protruding there from and each one being fixedly formed on one of said half-plates (6', 6") and being provided with a first hole (25), said straps (22) being each associated to a maintaining clip (23) capable of obtaining said assembly by means of a second hole (26) provided in the other half-plate (6', 6").

4. Device according to one of claims 1 to 3, **characterised in that** the gasket (17) of the base (6) is formed as a gasket with a lip or lips provided with a groove (20) allowing the gasket to be fit on the internal edge (18) limiting said internal hole (11).

5. Device according to claim 1, **characterised in that** it comprises a base (37) made of a rigid one-piece plate (38) where said internal hole (42) is provided.

6. Device according to claim 5, **characterised in that** the gasket (17) of base (38) is a flat plate (43) of elastic material provided with a hole (44) having dimensions which are smaller than the ones of the internal hole (42) provided in said plate (38), said elastic plate (43) forming a gasket being fixed on one of the sides of said plate (38), its hole (44) being centered or approximately centered with respect to that (42) of said plate (38).

7. Device according to claim 6, **characterised in that** the gasket (43) of said plate (38) is a silicon plate.

8. Device according to one of claims 6 or 7, **characterised in that** said means for fixing the elastic plate (43) on one of the sides of plate (38) consist of an added structure (45) with one part being fixed on said plate (38) and another part pressing a zone of said elastic plate (43) against one of the sides of said plate (38) for fixing it by clamping.

9. Device according to claim 8, **characterised in that** said added structure (45) consists of a material plate provided with a central hole (48), the external peripheral edge of said added plate (45) exceeding the elastic plate (43) being directly fixed on said plate (38) and its part surrounding the central hole (46) serving as a clamping zone for said elastic plate (43).

10. Device according to claim 9, **characterised in that** said elastic plate (43) comprises a pad (51) on its external peripheral edge and **in that** said added plate (45) comprises a space (52) for lodging said pad (51) and for blocking said elastic plate (43).

11. Device according to one of claims 1 to 10, **characterised in that** the sealing means between the base (6, 37) and the wall (3) consists of a gasket (13, 48) fixed on the rear side (9, 39) of said base (6, 37).

12. Device according to one of claims 1 to 11, **characterised in that** the base plate (6', 6") is made from metal and is provided with a perpendicular pleat (12) at its external edge (10), which extends on its support side (8).

13. Device according to one of claims 1 to 12, **characterised in that** the rear side (9) of base (6, 37) is provided with means (21, 47) serving as marks for centering it on the hole (2) formed in the wall (3).

14. Device according to one of claims 1 to 13, **characterised in that** the insulating shell (7) is formed of a tubular layer (27) of insulating material, arranged for surrounding the pipe (4), said tubular layer (27) being surrounded by a maintaining collar (28).

15. Device according to claim 14, **characterised in that** the layer of insulating material (27) of the insulating shell (7) is formed in two half-shells (27', 27"), each being half cylindrical and associated to a maintaining collar (28) consisting of a flexible metal sheet shaped as an open cylinder and provided with two free edges (29, 30) provided with removable closing means (31).
